# EUROPEAN PATENT APPLICATION

(11) **EP 4 635 698 A1**
(43) Date of publication of application: **22.10.2025**
(21) Application number: 23903588.4
(22) Date of filing: 15.12.2023
(51) Int. Cl.: B29B 9/06, B29B 7/72, B29B 13/06, B29C 48/395, B29C 48/76, C08J 3/20, C08L 23/26, C08L 29/04

(54) **METHOD FOR MANUFACTURING ETHYLENE-VINYL ALCOHOL COPOLYMER RESIN COMPOSITION PELLETS**

(30) Priority: 16.12.2022 JP 2022201212
(71) Applicant: Kuraray Co., Ltd., Kurashiki-shi, Okayama 710-0801 (JP)
(72) Inventor: NAGAE, Hiroyuki, Okayama-shi, Okayama 702-8601 (JP); SHIOTA, Hirotaka, Okayama-shi, Okayama 702-8601 (JP); KATAHIRA, Eriko, Okayama-shi, Okayama 702-8601 (JP)
(74) Representative: Müller-Boré & Partner Patentanwälte PartG mbB
(86) International application number: PCT/JP2023/045002
(87) International publication number: WO 2024/128307

(57) **Abstract**

Disclosed is a method for producing EVOH resin composition pellets, including: a first drying step (I) of introducing EVOH hydrous pellets having a water content W₀ of 25 to 50% by mass into a dryer and reducing a water content W₁ of the pellets to 5 to 25% by mass; a melt-kneading step (II) of introducing the pellets obtained in the first drying step (I) into an extruder, adding an aqueous solution or aqueous dispersion containing an additive, and melt-kneading the pellets; a cutting step (III) of cutting a molten resin composition discharged from the extruder to obtain EVOH resin composition hydrous pellets having a water content W₂ of 5 to 20% by mass; and a second drying step (IV) of drying the hydrous pellets obtained in the cutting step (III) to obtain EVOH resin composition pellets having a water content W₃ of 0.5% by mass or less, in which a water content decrement (W₀ - W₁) in the first drying step (I) is 10 to 45% by mass. Accordingly, it is possible to improve the production speed when an additive is added to hydrous EVOH in an extruder, and thereby efficiently obtain EVOH resin composition pellets.

## Description

### Technical Field

The present invention relates to a method for producing ethylene-vinyl alcohol copolymer resin composition pellets.

### Background Art

An ethylene-vinyl alcohol copolymer (hereinafter, sometimes referred to as EVOH) is a polymer material excellent in gas barrier properties, fuel barrier properties, oil resistance, aroma retention, antistatic properties, etc., and has been widely used after being molded into films, sheets, containers, and the like. Although there are various methods for molding EVOH into various molded articles, melt-molding using an extruder, such as extrusion molding or injection molding, is often performed. However, since it is usually necessary to set the melting temperature to 200°C or more during the molding of EVOH, EVOH containing no additives is easily degraded during melt-molding, and such degradation may cause generation of fish-eyes or hard spots in a product, leading to deterioration in quality.

To solve this problem, a method of adding a trace component such as an acidic substance and/or a metal salt to EVOH is known, and to improve long-run workability and suppress appearance defects typified by gels and hard spots, a method of blending at least one additive selected from among carboxylic acids, boron compounds, phosphoric acid compounds, alkali metal salts, and alkaline earth metal salts is known.

As a method of making EVOH contain such an additive in, a method of immersing EVOH hydrous pellets in an aqueous solution containing an additive dissolved and impregnating the pellets with the additive is known (for example, Patent Literature 1). In this method, however, it takes a long time to uniformly impregnate the EVOH pellets with the additive. In addition, a treatment bath or a treatment tower for subjecting EVOH pellets to immersion treatment is required, and waste water treatment equipment or recovery equipment for discarding the treatment liquid after use is also required.

To solve such a problem, a method has been proposed in which EVOH hydrous pellets are charged into an extruder and melt-kneaded, and an aqueous solution containing an additive is added to the molten hydrous EVOH, followed by kneading, whereby the additive is blended into the EVOH.

For example, Example 1 of Patent Literature 2 describes that EVOH resin composition hydrous pellets containing an additive and having a water content of 20% by mass were obtained by charging EVOH pellets having a water content of 39% by mass into an extruder, dewatering the pellets by a dewatering slit, then adding an aqueous solution containing an additive, melt-kneading the mixture, and subsequently pelletizing the molten mixture. In addition, it is described that the obtained EVOH resin composition hydrous pellets were dried in a hot air dryer, affording EVOH resin composition pellets having a water content of 0.2% by mass.

Further, Example 4 of Patent Literature 3 describes that EVOH resin composition pellets containing an additive and having a water content of 0.2% by mass were obtained by introducing EVOH hydrous pellets having a water content of 32% by mass into a hot air dryer, reducing the water content of the pellets to 9.9% by mass, charging the pellets into an extruder, adding an aqueous solution containing an additive, melt-kneading the mixture, degassing the mixture through a vent port with a vacuum pump, discharging the mixture from the extruder, and subsequently pelletizing the mixture. Since the pellets thus obtained have a sufficiently low water content, it can be subjected to melt-molding as received.

### Citation List

### Patent Literatures

Patent Literature 1: JP 64-66262 A
Patent Literature 2: JP 2002-284811 A
Patent Literature 3: WO 2004/009313 A1

### Summary of Invention

### Technical Problem

However, when an attempt is made to improve the production speed by increasing the amount of the hydrous EVOH to be supplied to the extruder in the above-described conventional methods, the EVOH leaks through the dewatering slit or the vent port, and thus it is difficult to improve the production speed. More specifically, when the feed amount of the hydrous EVOH to the extruder is increased to improve the production speed under the conditions of Patent Literature 2, the hydrous EVOH leaks through the dewatering slit, and when the feed amount of the hydrous EVOH to the extruder is increased to improve the production speed under the conditions of Patent Literature 3, the EVOH leaks through the vent port due to the vent up, so that it is difficult to efficiently improve the production speed.

The present invention has been devised to solve the above problems, and provides a method for efficiently obtaining EVOH resin composition pellets by improving a production speed when an additive is added to a hydrous EVOH in an extruder.

### Solution to Problem

The problem described above is solved by providing a method for producing ethylene-vinyl alcohol copolymer resin composition pellets, including:
a first drying step (I) of introducing ethylene-vinyl alcohol copolymer hydrous pellets having a water content W₀ of 25 to 50% by mass into a dryer and reducing a water content W₁ of the pellets to 5 to 25% by mass;
a melt-kneading step (II) of introducing the pellets obtained in the first drying step (I) into an extruder, adding an aqueous solution or aqueous dispersion containing an additive, and melt-kneading the pellets;
a cutting step (III) of cutting a molten resin composition discharged from the extruder to obtain ethylene-vinyl alcohol copolymer resin composition hydrous pellets having a water content W₂ of 5 to 20% by mass; and
a second drying step (IV) of drying the hydrous pellets obtained in the cutting step (III) to obtain ethylene-vinyl alcohol copolymer resin composition pellets having a water content W₃ of 0.5% by mass or less,
in which a water content decrement (W₀ - W₁) in the first drying step (I) is 10 to 45% by mass, and
the ethylene-vinyl alcohol copolymer has an ethylene unit content of 20 to 60 mol% and a degree of saponification of 95 mol% or more.

At this time, it is preferable that in the melt-kneading step (II), an average residence time of the ethylene-vinyl alcohol copolymer in the extruder is 300 seconds or less. It is also preferable that in the melt-kneading step (II), the aqueous solution or aqueous dispersion to be added is an aqueous solution in which at least one additive selected from among carboxylic acids, boron compounds, phosphoric acid compounds, alkali metal salts, and alkaline earth metal salts is dissolved. It is also preferable that in the melt-kneading step (II), liquid water or water vapor is discharged from at least one place of the extruder, and in this configuration, it is further preferable that in the melt-kneading step (II), the liquid water or the water vapor is discharged from a position downstream of a position to which the aqueous solution or aqueous dispersion is added.

Furthermore, the problem described above is also solved by, the method for production ethylene-vinyl alcohol copolymer resin composition pellets, in which the ethylene-vinyl alcohol copolymer hydrous pellets are obtained via a step (A) of introducing an ethylene-vinyl alcohol copolymer solution containing 50 parts by mass or more of an alcohol having a boiling point of 100°C or less with respect to 100 parts by mass of the ethylene-vinyl alcohol copolymer into a vessel, putting the solution into contact with water vapor in the vessel to let out the alcohol with the water vapor, and letting out a hydrous ethylene-vinyl alcohol copolymer from the vessel; a step (B) of feeding the hydrous ethylene-vinyl alcohol copolymer to an extruder, melt-kneading the copolymer, and then discharging the copolymer from the extruder; and a step (C) of cutting the hydrous ethylene-vinyl alcohol copolymer discharged from the extruder, and then the ethylene-vinyl alcohol copolymer hydrous pellets are supplied to the first drying step (I).

### Advantageous Effects of Invention

According to the method for producing EVOH resin composition pellets of the present invention, it is possible to improve the production speed when an additive is added to hydrous EVOH in an extruder, and thereby efficiently obtain EVOH resin composition pellets. Here, the above "efficiently" means that even if the production speed is improved (the residence time of the hydrous EVOH in the extruder is reduced), the pellets can be produced while the EVOH is inhibited from leaking from the extruder and the EVOH discharged from the extruder is inhibited from foaming.

### Brief Description of Drawings

FIG. 1 is a diagram showing cylinder configuration a and screw configuration X of a twin-screw extruder in Examples 1 to 7 and Comparative Examples 1 and 2.
FIG. 2 is a diagram showing cylinder configuration b and screw configuration Y of a twin-screw extruder in Example 8 and Comparative Examples 3 to 6.
FIG. 3 is a diagram showing cylinder configuration c and screw configuration Y of a twin-screw extruder in Comparative Examples 7 and 8.
FIG. 4 is a diagram showing cylinder configuration d and screw configuration X of a twin-screw extruder in Comparative Examples 9 and 10.

### Description of Embodiments

The present invention is a method for producing ethylene-vinyl alcohol copolymer resin composition pellets, including:
a first drying step (I) of introducing ethylene-vinyl alcohol copolymer hydrous pellets having a water content W₀ of 25 to 50% by mass into a dryer and reducing a water content W₁ of the pellets to 5 to 25% by mass;
a melt-kneading step (II) of introducing the pellets obtained in the first drying step (I) into an extruder, adding an aqueous solution or aqueous dispersion containing an additive, and melt-kneading the pellets;
a cutting step (III) of cutting a molten resin composition discharged from the extruder to obtain ethylene-vinyl alcohol copolymer resin composition hydrous pellets having a water content W₂ of 5 to 20% by mass; and
a second drying step (IV) of drying the hydrous pellets obtained in the cutting step (III) to obtain ethylene-vinyl alcohol copolymer resin composition pellets having a water content W₃ of 0.5% by mass or less,
in which a water content decrement (W₀ - W₁) in the first drying step (I) is 10 to 45% by mass, and
the ethylene-vinyl alcohol copolymer has an ethylene unit content of 20 to 60 mol% and a degree of saponification of 95 mol% or more.

First, a method for producing the EVOH to be used in the present invention will be described. The EVOH is usually obtained by saponifying an ethylene-vinyl ester copolymer. The copolymerization of ethylene and a vinyl ester may be any of solution polymerization, suspension polymerization, emulsion polymerization, and bulk polymerization. In addition, the copolymerization may be in either a continuous process or a batch process. Examples of the polymerization conditions in solution polymerization are shown below.

As the solvent to be used, an alcohol having a boiling point of 100°C or less is preferable from the viewpoint of the solubility of the ethylene-vinyl ester copolymer and the EVOH, the viewpoint of handleability, the viewpoint that the alcohol can be efficiently replaced with water, and so on. The boiling point is more preferably 80°C or less, and still more preferably 70°C or less. Examples of the alcohol having a boiling point of 100°C or lower include methanol, ethanol, n-propyl alcohol, isopropyl alcohol, and t-butyl alcohol, and methanol is particularly preferable.

Examples of the initiator used in the polymerization include azonitrile initiators such as 2,2-azobisisobutyronitrile, 2,2-azobis- (2,4-dimethylvaleronitrile), 2,2-azobis- (4-methoxy -2, 4-dimethylvaleronitrile), and 2,2-azobis- (2-cyclopropylpropionitrile); and organic peroxide initiators such as isobutyryl peroxide, cumyl peroxy neodecanoate, diisopropyl peroxy carbonate, di-n-propyl peroxy dicarbonate, t-butyl peroxy neodecanoate, lauroyl peroxide, benzoyl peroxide, and t-butyl hydroperoxide.

Examples of the vinyl ester include fatty acid vinyl esters such as vinyl acetate, vinyl propionate, and vinyl pivalate, and vinyl acetate is suitable. In addition to ethylene and a vinyl ester, a monomer copolymerizable therewith can coexist in a small amount for polymerization. Examples of such monomers include: an α-olefin such as propylene, butylene, isobutylene, pentene, hexene α-octene, or α-dodecene; alkene having an ester group such as 3-acyloxy -1 propene, 3-acyloxy -1 butene, 4-acyloxy -1 butene, 3,4-diacyloxy -1 butene, 3-acyloxy -4 methyl -1 butene, 4-acyloxy -2 methyl -1 butene, 4-acyloxy -3 methyl -1 butene, 3,4-diacyloxy -2 methyl -1 butene, 4-acyloxy -1 pentene, 5-acyloxy -1 pentene, 4,5-diacyloxy -1 pentene, 4-acyloxy - 1 hexene, 5-acyloxy -1 hexene, 6-acyloxy -1 hexene, 5,6-diacyloxy -1 hexene, or 1,3-diacetoxy -2 methylenepropane; unsaturated acids such as acrylic acid, methacrylic acid, crotonic acid, maleic acid and itaconic acid, anhydrides, salts, mono- or dialkyl esters thereof; nitriles such as acrylonitrile and methacrylonitrile; amides such as acrylamide and methacrylamide; olefinsulfonic acid such as ethylenesulfonic acid, allylsulfonic acid, or methallylsulfonic acid or a salt thereof; vinylsilanes such as vinyltrimethoxysilane, vinyltriethoxysilane, vinyltri (β-methoxy-ethoxy) silane, and γ-methacryloxypropylmethoxysilane; alkyl vinyl ether; vinyl ketone; N-vinylpyrrolidone; vinyl chloride; and vinylidene chloride. The content of monomer units other than ethylene, vinyl ester, and vinyl alcohol in the EVOH is preferably 20 mol% or less, and may be preferably 10 mol% or less, 5 mol% or less, 3 mol% or less, 1 mol% or less, or 0.1 mol% or less. The EVOH may not contain the other monomer unit.

Polymerization conditions are preferably as follows.
(1) Temperature; preferably 20 to 90°C, and more preferably 40°C to 70°C.
(2) Time (average residence time in case of continuous system); preferably 2 to 15 hours, and more preferably 3 to 11 hours.
(3) Polymerization rate; preferably 10 to 90%, and more preferably 30 to 80% based on the vinyl ester charged.
(4) Resin content in solution after polymerization; preferably 5 to 85% by mass, and more preferably 20 to 70% by mass.

After polymerization is performed for a prescribed time and a prescribed polymerization rate is attained, a polymerization inhibitor is added, as necessary, and unreacted ethylene gas is evaporated and removed, and then unreacted vinyl ester is expelled. A method of expelling the unreacted vinyl ester to be adopted may be, for example, a method in which a polymerization solution from which ethylene has been removed is continuously fed at a constant speed from an upper part of a tower filled with Raschig rings, a vapor of an organic solvent, preferably an alcohol having a boiling point of 100°C or less, optimally methanol, is blown into the tower from a lower part thereof, a mixed vapor of the organic solvent and unreacted vinyl ester is distilled off from the top of the tower, and a copolymer solution from which the unreacted vinyl ester has been removed is taken from the bottom of the tower.

An alkali catalyst is added to the copolymer solution from which the unreacted vinyl ester has been removed, the vinyl ester component in the copolymer is saponified. The saponification method may be in either a continuous process or a batch process. As the alkali catalyst, sodium hydroxide, potassium hydroxide, an alkali metal alcoholate, and so on are used. The solvent to be used for the saponification is preferably methanol. The saponification conditions are, for example, as follows.
(1) Concentration of ethylene-vinyl ester copolymer in solution; 10 to 50% by mass.
(2) Reaction temperature; 30 to 150°C.
(3) Amount of catalyst used; 0.005 to 0.6 equivalents (based on the vinyl ester component).
(4) Time (in the case of the continuous process, average residence time); 10 minutes to 6 hour.

In general, in the case of continuous saponification, methyl acetate generated by saponification can be more efficiently removed, so that a resin having a high degree of saponification can be obtained with a smaller amount of catalyst than in the case of batch mode. In the case of the continuous type, it is necessary to perform saponification at a higher temperature in order to prevent precipitation of EVOH generated by saponification. Therefore, in the continuous formula, the reaction temperature and the catalyst amount are preferably in the following ranges.

Reaction temperature; 70 to 150°C.

Amount of catalyst used; 0.005 to 0.1 equivalents (based on the vinyl ester component).

The degree of saponification of the EVOH used in the present invention is 95 mol% or more. If the saponification degree is less than 95 mol%, the torque applied to the extruder may increase when the production speed is improved, which is not preferable. The degree of saponification is preferably 98 mol% or more, more preferably 99 mol% or more, and still more preferably 99.5 mol% or more. The degree of saponification may be arbitrarily adjusted depending on conditions. Since the degree of saponification substantially does not change in any of the first drying step (I), the melt-kneading step (II), the cutting step (III), and the second drying step (IV), the degree of saponification of the EVOH may be considered to be the same in the EVOH hydrous pellets introduced into the first drying step (I) and the EVOH resin composition pellets after the second drying step (IV). Therefore, in both the EVOH hydrous pellets introduced into the first drying step (I) and the EVOH resin composition pellets after the second drying step (IV), the degree of saponification of the EVOH satisfies the above numerical range.

The EVOH to be used in the present invention has an ethylene unit content of 20 to 60 mol%. When the ethylene unit content is less than 20 mol%, the affinity with water is excessively high, and the EVOH easily leaks out from a dewatering slit during the melt-kneading step (II). From the dewatering slit described in the present description, the water vapor may be discharged, or the liquid water may be discharged. To effectively prevent the leakage of the EVOH, the ethylene unit content is more preferably 24 mol% or more, and still more preferably 28 mol% or more. Meanwhile, when the ethylene unit content is 60 mol% or less, the gas barrier properties of the EVOH are improved. The ethylene unit content is preferably 50 mol% or less, and more preferably 45 mol% or less. Since the ethylene unit content substantially does not change in any of the first drying step (I), the melt-kneading step (II), the cutting step (III), and the second drying step (IV), the ethylene unit content of the EVOH may be considered to be the same in the EVOH hydrous pellets introduced into the first drying step (I) and the EVOH resin composition pellets after the second drying step (IV). Therefore, in both the EVOH hydrous pellets introduced into the first drying step (I) and the EVOH resin composition pellets after the second drying step (IV), the ethylene unit content of the EVOH satisfies the above numerical range.

The saponification step provides a solution containing the EVOH. Hereinafter, the solution containing the EVOH is simply referred to as an EVOH solution. Herein, however, a paste-like material in which the whole is not completely uniform and is phase-separated is also included in the EVOH solution. As a post-treatment method for the EVOH solution after the saponification reaction, in a tower type vessel, by feeding a mixed vapor of a solvent and water from a lower part of the vessel and feeding the EVOH solution from a position above the feeding position of the mixed vapor, a part of the solvent present in the EVOH solution fed is replaced with water, and a high-concentration EVOH solution can be obtained. The concentration of EVOH in the EVOH solution to be fed to the tower type vessel is preferably 15 to 50% by mass, and more preferably 25 to 40% by mass. It is also preferable that the ratio of the feed amount of the EVOH solution to the feed amount of the mixed vapor (feed amount of solution/feed amount of vapor) is 100/400 to 100/8 in mass ratio. Furthermore, the content of water in the mixed vapor is preferably 20 to 70% by mass. The solvent to be used for the mixed vapor is preferably an alcohol having a boiling point of 130°C or less, and examples of such an alcohol include such alcohols as methanol, ethanol, propanol, and butanol. An alcohol having a boiling point of 100°C or less is more preferable, and in particular, methanol is preferable from the viewpoint of easy availability, low price, low boiling point, and easy handleability.

The high-concentration EVOH solution thus obtained usually contains 50 parts by mass or more of an alcohol having a boiling point of 100°C or less based on 100 parts by mass of the EVOH. The content of the alcohol is preferably 1000 parts by mass or less, and more preferably 500 parts by mass or less. By setting the content of the alcohol within this range, the fluidity of the EVOH solution is secured, and efficient resin production is possible. The alcohol used here is preferably methanol. The EVOH solution may contain water together with the alcohol, and preferably contains 10 to 500 parts by mass of water.

As a suitable method for obtaining the EVOH hydrous pellets to be used in the present invention, for example, there is a method in which the high-concentration aqueous EVOH solution obtained as described above is subjected to the following steps (A), (B), and (C) in this order. That is, the EVOH hydrous pellets to be used in the present invention are obtained via a step (A) of introducing an EVOH solution containing 50 parts by mass or more of an alcohol having a boiling point of 100°C or less with respect to 100 parts by mass of the EVOH into a vessel, putting the solution into contact with water vapor in the vessel to let out the alcohol with the water vapor, and letting out a hydrous EVOH from the vessel; a step (B) of feeding the hydrous EVOH to an extruder, melt-kneading the copolymer, and then discharging the copolymer from the extruder; and a step (C) of cutting the hydrous EVOH discharged from the extruder. According to such a method, the alcohol in the EVOH solution can be efficiently replaced with water, and the water content and the temperature of the EVOH can be easily adjusted.

In the step (A), the method for putting the EVOH solution introduced into the vessel into contact with the water vapor in the vessel is not particularly limited, and may be either a continuous process or a batch process. The form of the vessel is also not particularly limited, but a tower type vessel is suitable in the case of the continuous process, and a tank type vessel is suitable in the case of the batch process. Considering the production efficiency, the continuous process is industrially preferable. Examples of a tower type vessel include plate towers such as a perforated plate tower and a bubble-cap tower, and a packed tower in which a ring type filler is put.

In the tower type vessel, it is preferable that by feeding the water vapor from a lower part of the vessel and feeding the EVOH solution from a position above the feeding position of the water vapor, the solvent (alcohol) present in the EVOH solution fed is let out together with water vapor and hydrous EVOH having a water content of 10 to 90% by mass is let out from the vessel. An excessively small amount of the water vapor to be introduced brings a poor efficiency of removing the solvent (alcohol), whereas an excessively large amount thereof brings a disadvantage in view of costs. Therefore, the amount is preferably 0.3 to 30 times in a mass ratio with respect to the amount of the EVOH solution to be introduced, more preferably 0.5 to 10 times, and further preferably 0.7 to 5 times. The water vapor to be brought into contact with the EVOH solution may contain a solvent (alcohol) in an amount of 10 parts by mass or less with respect to 100 parts by mass of the water vapor. However, to efficiently remove the solvent (alcohol), it is preferable that the water vapor does not contain the solvent (alcohol).

The alcohol vapor and the water vapor let out from the upper part of the tower are condensed in a condenser, recovered in the form of an aqueous alcohol solution, and, as necessary, purified and reused. The EVOH solution comes into direct contact with the water vapor in the vessel and the content of the solvent (alcohol) gradually decreases, while the EVOH is in the form of a swollen paste and can be let out from the vessel without gelating while retaining fluidity. EVOH is dissolved in a methanol/water mixed solvent at a temperature of, for example, about 60 to 70°C under normal pressure, but is not dissolved under normal pressure when the solvent is only water. However, for example, in the presence of pressurized water vapor at a temperature of 90°C or more, fluidity can be maintained even when the EVOH contains substantially only water.

The temperature in the vessel is preferably 100 to 150°C. When the temperature in the vessel is less than 100°C, the fluidity of the hydrous EVOH becomes insufficient, and there is a risk that the hydrous EVOH gelates or cause clogging in the vessel. The temperature is more preferably 110°C or more, and still more preferably 120°C or more. Meanwhile, when the temperature in the vessel exceeds 150°C, the EVOH may be degraded. The temperature is more preferably 140°C or less.

In addition, if the pressure in the vessel is excessively low, the efficiency of removing alcohol may deteriorate. The pressure in the vessel is preferably 0.1 MPa or more, more preferably 0.15 MPa or more, and still more preferably 0.2 MPa or more. Meanwhile, if the pressure in the vessel is excessively high, the water content of the hydrous EVOH let out from the vessel becomes excessively high, so that the melt viscosity of the hydrous EVOH to be introduced into the extruder described later may become excessively low. Therefore, the pressure in the vessel is preferably 0.6 MPa or less, more preferably 0.5 MPa or less, and still more preferably 0.4 MPa or less.

After the EVOH solution is brought into contact with the water vapor as described above, the hydrous EVOH having fluidity is led out from the vessel. In the step (B), the hydrous EVOH led out from the vessel is fed to an extruder, melt-kneaded, and then the copolymer is discharged from the extruder.

In the step (B), the water content of the hydrous EVOH to be introduced into the extruder is 10 to 90% by mass. When the water content is less than 10% by mass, the melt viscosity of the hydrous EVOH becomes excessively high, and the hydrous EVOH cannot be discharged from the tip of the extruder, or the melting temperature becomes high to secure fluidity, and the EVOH is degraded and the hue thereof deteriorates. The water content is preferably 20% by mass or more, more preferably 30% by mass or more, still more preferably 40% by mass or more, particularly preferably 45% by mass or more. Meanwhile, if the water content exceeds 90% by mass, the melt viscosity of the hydrous EVOH becomes excessively low, and the EVOH easily leaks together with the water discharged during the course of reducing the water content of the hydrous EVOH. The water content is preferably 80% by mass or less, more preferably 70% by mass or less, still more preferably 60% by mass or less, and particularly preferably 55% by mass or less. The water content of the hydrous EVOH to be introduced into the extruder is measured by the method described in Examples described later.

From the viewpoint of the maintenance of the working environment and the surrounding environment and the viewpoint that the resulting EVOH hydrous pellets hardly stick to each other, the content of the alcohol having a boiling point of 100°C or less in the hydrous EVOH to be introduced into the extruder in the step (B) is preferably 10% by mass or less, more preferably 5% by mass or less, still more preferably 1% by mass or less, and particularly preferably 0.5% by mass or less.

In the step (B), the hydrous EVOH to be introduced into the extruder may contain, for example, about 0.1 to 5% by mass in terms of metal of an alkali metal salt corresponding to, for example, a residue of the catalyst used in the saponification step, and may further contain by-product salts, other impurities, and the like. The content of components other than the EVOH, water, and alcohol having a boiling point of 100°C or less in the hydrous EVOH to be fed to the extruder is preferably 10% by mass or less, more preferably 5% by mass or less, still more preferably 3% by mass or less, and particularly preferably 1% by mass or less.

The extruder to be used in the step (B) may be a single screw extruder or a multi-screw extruder, but a twin-screw extruder is preferable. The L/D of the extruder is preferably 8 to 30, more preferably 9 to 25, and still more preferably 10 to 20. An inlet of the water-containing EVOH is installed in a cylinder of the extruder. After the water-containing EVOH is introduced from the inlet, a screw disposed in the cylinder rotates to melt and knead the water-containing EVOH, and the water-containing EVOH is discharged from a discharge port at a tip of the cylinder. At this time, it is preferable to provide a dehydration slit in the cylinder to remove moisture.

The water content of the hydrous EVOH discharged from the extruder is preferably 25 to 50% by mass. When the water content is 25% by mass or more, the melt viscosity of the hydrous EVOH is lowered, and the hydrous EVOH tends to be easily discharged. The water content is more preferably 30% by mass or more. Meanwhile, when the water content is 50% by mass or less, the melt viscosity of the hydrous EVOH increases, and the EVOH tends to be inhibited from leaking out. The water content is more preferably 40% by mass or less.

Following step (B), in step (C), the water-containing EVOH discharged from the extruder is cut to obtain an EVOH water-containing pellet. The method is not particularly limited, and examples thereof include a method of directly cutting the water-containing EVOH (molten state) discharged from the extruder, and a method of extruding the water-containing EVOH discharged from the extruder into a coagulating liquid in a strand shape, coagulating the EVOH, and then cutting the EVOH. Among these methods, a method of directly cutting the water-containing EVOH is preferable. As a method of directly cutting the water-containing EVOH discharged from the extruder, a hot cut method, an underwater cut method, or the like is adopted. When the hydrous EVOH is extruded into a strand shape to coagulate and then cut, cylindrical pellets are obtained, whereas when directly cut in a molten state, spherical (or substantially spherical) pellets are obtained. The size of the EVOH hydrous pellets to be produced can be, for example, 1 mm or more and 10 mm or less in diameter in the case of a spherical (or substantially spherical) shape, and 1 mm or more and 10 mm or less in diameter and 1 mm or more and 10 mm or less in length in the case of a cylindrical shape. As compared with the method of extruding an EVOH solution into a coagulation liquid, extruding the EVOH solution into a strand shape to coagulate, and then cutting the coagulated material, the method of cutting the hydrous EVOH in a molten state as described above does not need to consider the take-up speed at which the strand can be stably formed, and therefore, the method is superior in productivity. The EVOH hydrous pellets obtained as described above are subjected to the first drying step (I).

Another method for obtaining the EVOH hydrous pellets to be used in the present invention may be a method in which the high-concentration aqueous EVOH solution is extruded in a strand shape through a nozzle into a coagulation liquid, coagulated in a water bath, and then cut. Water is used as the coagulation liquid, but a small amount of alcohol may be contained. The coagulated strand is cut with a cutter into pellets. As the cutter, a strand cutter is suitably used. The size of the obtained pellets can be, for example, 1 mm or more and 10 mm or less in diameter and 1 mm or more and 10 mm or less in length in the case of a cylindrical shape, and 1 mm or more and 10 mm or less in diameter in the case of a spherical shape. The EVOH hydrous pellets thus obtained can also be subjected to the first drying step (I).

Since the EVOH hydrous pellets obtained as described above contains an alkali catalyst, by-product salts such as sodium acetate and potassium acetate, and other impurities, these may be removed by neutralization and washing, as necessary. At that time, a catalyst residue such as sodium acetate may be allowed to partially remain in the EVOH hydrous pellets.

In the first drying step (I), the EVOH hydrous pellets having a water content W₀ of 25 to 50% by mass obtained as described above are introduced into a dryer, and the water content W₁ of the pellets is reduced to 5 to 25% by mass. Since the EVOH hydrous pellets to be introduced into the dryer are porous and have a high drying rate, the EVOH hydrous pellets can be dried at a low drying temperature in a short time.

The water content W₀ at the time of introduction into the dryer is 25 to 50% by mass. When the water content W₀ is 25% by mass or more, the resulting EVOH resin composition pellets have a favorable hue, and the water content is preferably 30% by mass or more. When the water content W₀ is less than 25% by mass, the average residence time can be shortened even if the EVOH hydrous pellets are directly subjected to the melt-kneading step (II), so that the significance of adopting the first drying step (I) is small. Meanwhile, when the water content W₀ exceeds 50% by mass, sticking may occur in the dryer, and the drying efficiency may decrease. The water content W₀ is preferably 45% by mass or less.

The dryer to be used in the first drying step (I) is not particularly limited as long as it can dry the pellets while maintaining the form thereof. A hot air dryer or the like can be used. The drying method may be a fluidized drying method using a fluidized dryer or a static drying method using a static dryer, but a fluidized drying method is preferable in order to prevent sticking of pellets. In addition, these may be used in combination, and it is also possible to adopt a method in which drying is first performed by a fluidized drying method, and then drying is performed by a static drying method.

The drying temperature is not particularly limited, but it is preferable to dry at 40 to 150°C for 0.1 to 15 hours. The EVOH water-containing pellet introduced into the dryer can be quickly dried even at a low temperature, and thermal degradation can be suppressed. The drying temperature is more preferably 50°C or more, and still more preferably 60°C or more. The drying temperature is more preferably 120°C or lower, still more preferably 100°C or lower, and most preferably 90°C or lower. The drying time varies depending on the drying temperature and the target moisture amount, but is more preferably 0.2 hours or more, and still more preferably 0.5 hours or more. The drying time is more preferably 5 hours or less, and still more preferably 3 hours or less. It may be dried in air or in an inert gas such as nitrogen. In the case of drying in an inert gas, thermal degradation is less likely to occur even when the drying temperature is set to be high.

The water content W₁ of the EVOH hydrous pellets obtained by drying in the first drying step (I) is 5 to 25% by mass, and the decrement (W₀ - W₁) in the water content in this step is 10 to 45% by mass. When the water content W₁ is less than 5% by mass, the resin temperature in the extruder in the melt-kneading step (II) becomes excessively high, and the hydrous EVOH discharged from the extruder is likely to foam. The water content W₁ is preferably 7% by mass or more, and more preferably 10% by mass or more. Meanwhile, when the water content W₁ exceeds 25% by mass, the water content in the extruder in the melt-kneading step (II) is excessively high, and the EVOH leaks out from the dewatering slit or the discharged EVOH composition foams. The water content W₁ is preferably 22% by mass or less, and more preferably 18% by mass or less. When the decrement (W₀ - W₁) in the water content is less than 10% by mass, the significance of providing the first drying step (I) is small. The decrement (W₀ - W₁) in the water content is preferably 15% by mass or more, and more preferably 20% by mass or more. Meanwhile, when the decrement (W₀ - W₁) in the water content exceeds 45% by mass, it is difficult to dry the pellets in a short time while maintaining the shape of the pellets. The decrement (W₀ - W₁) in the water content is preferably 35% by mass or less, and more preferably 30% by mass or less.

In the melt-kneading step (II), the pellets obtained in the first drying step (I) are introduced into an extruder, an aqueous solution or an aqueous dispersion containing an additive is added, and the mixture is melt-kneaded. As a result, the additive can be uniformly dispersed in the hydrous EVOH melted in the extruder. The additive may be in the form of an aqueous solution with the additive dissolved in water or a dispersion dispersed with the additive dispersed in water. In particular, an aqueous solution in which at least one additive selected from among a carboxylic acid, a boron compound, a phosphoric acid compound, an alkali metal salt, and an alkaline earth metal salt is dissolved is preferable.

The carboxylic acid contained in the aqueous solution is not particularly limited. Examples thereof include acetic acid, lactic acid, oxalic acid, succinic acid, benzoic acid, and citric acid, and carboxylic acids having 4 or less carbon atoms are preferable. Among them, acetic acid is preferable from the viewpoint of cost, availability, and so on. The content of the carboxylic acid in the EVOH resin composition pellets after drying of the present invention is preferably 10 to 5000 ppm because if it is excessively small, coloring may occur during melt-molding, and if it is excessively large, interlayer adhesiveness may be insufficient. The content of the carboxylic acid is more preferably 30 ppm or more, and still more preferably 50 ppm or more. The content of the carboxylic acid is more preferably 1000 ppm or less, and still more preferably 500 ppm or less.

Examples of the boron compound contained in the aqueous solution include, but are not limited to, boric acids, boric acid esters, boric acid salts, and borohydrides. Specifically, examples of the boric acids include orthoboric acid, metaboric acid, and tetraboric acid, examples of the boric acid esters include triethyl borate and trimethyl borate, and examples of the boric acid salts include alkali metal salts and alkaline earth metal salts of the various boric acids described above, and borax. Among these compounds, orthoboric acid (hereinafter, simply referred to as boric acid) is preferable. The content of the boron compound in the EVOH resin composition pellets after drying of the present invention is preferably 10 to 2000 ppm, and more preferably 50 to 1000 ppm in terms of boron because if the content is excessively small, the effect of improving thermal stability is small, and if the content is excessively large, gelation may occur to result in poor moldability.

Examples of the phosphoric acid compound contained in the aqueous solution include various acids such as phosphoric acid and phosphorous acid, and salts thereof. Any of monophosphate, diphosphate and triphosphate may be contained as a phosphate, and the kind of cations thereof is not particularly limited; however, an alkali metal salt or an alkaline earth metal salt is preferable. Among them, a phosphoric acid compound is preferably added in the form of sodium dihydrogen phosphate, potassium dihydrogen phosphate, disodium hydrogen phosphate, or dipotassium hydrogen phosphate. The content of the phosphoric acid compound in the EVOH resin composition pellets after drying of the present invention is preferably 1 to 1000 ppm in terms of phosphate radical. The addition within such a range makes it possible to inhibit coloring of a molded article and the generation of gels and hard spots. When the content of the phosphoric acid compound is less than 1ppm, there is a risk that coloring is likely to occur during melt-molding. In addition, when the content is more than 1000 ppm, there is a risk that gels and hard spots in a molded article are likely to be generated.

Examples of the alkali metal salt contained in the aqueous solution include an aliphatic carboxylate, an aromatic carboxylate, and a phosphate. Examples thereof specifically include sodium acetate, potassium acetate, sodium phosphate, lithium phosphate, sodium stearate, potassium stearate, and sodium salts of ethylenediaminetetraacetic acid. Among them, sodium acetate, potassium acetate, and sodium phosphate are preferable. The content of the alkali metal salt in the EVOH resin composition pellets after drying of the present invention is preferably 5 to 5000 ppm in terms of alkali metal element. The content is more preferably 20 to 1000 ppm, and still more preferably 30 to 750 ppm.

Examples of the alkaline earth metal salt contained in the aqueous solution include a magnesium salt, a calcium salt, a barium salt, and a beryllium salt, and in particular, a magnesium salt and a calcium salt are suitable. The kind of anion of the alkaline earth metal salt is not particularly limited, but acetate and phosphate are suitable. The content of the alkaline earth metal salt in the EVOH resin composition pellets after drying of the present invention is preferably 10 to 1000 ppm, and more preferably 20 to 500 ppm in terms of metal. When the content of the alkaline earth metal salt is less than 10 ppm, there is a risk that the effect of improving the long-run workability is insufficient. When the content is more than 1000 ppm, there is a risk that coloring is likely to occur during resin melting.

Meanwhile, as the dispersion liquid to be added to the hydrous EVOH, a colloid of inorganic particles such as colloidal silica, colloidal titania, or colloidal zirconia, or a dispersion of inorganic particles having a particle diameter larger than that of colloidal silica, colloidal titania, or colloidal zirconia may be added.

The extruder to be used in the melt-kneading step (II) may be a single screw extruder or a multi-screw extruder, and a twin-screw extruder is preferable. The L/D of the extruder is preferably 10 to 55, and more preferably 20 to 47. The cylinder of the extruder is provided with an inlet for the EVOH hydrous pellets. After the EVOH hydrous pellets are introduced from the inlet, a screw disposed in the cylinder rotates, whereby the EVOH hydrous pellets are melted and kneaded, and discharged through a discharge port at the tip of the cylinder. The screw configuration inside the cylinder is not particularly limited, and it is preferable that a reverse flight screw is partially disposed in addition to a full flight screw and sufficiently knead a molten resin.

The resin temperature in the extruder is preferably 120 to 210°C. When the resin temperature is excessively low, the torque of the screw may be excessively large, and the resin temperature is more preferably 140°C or more, and still more preferably 150°C or more. Meanwhile, when the resin temperature is excessively high, the EVOH resin composition pellets to be obtained is likely to be foamed, and there is a risk of coloring or generation of gels when melt-kneading is performed for a long time. Therefore, the resin temperature is more preferably 200°C or less, and still more preferably 190°C or less.

The extruder to be used in the melt-kneading step (II) is provided with an additive introduction part at a position downstream of the pellet introduction port. From the additive introduction part, an aqueous solution or an aqueous dispersion containing an additive is injected into the hydrous EVOH in a molten state, and the mixture is melt-kneaded. The addition amount of the aqueous solution or the aqueous dispersion is preferably 1 to 30 parts by mass with respect to 100 parts by mass of the dry weight of the EVOH. When the addition amount is less than 1 part by mass, it may be difficult to attain uniform blending, and the addition amount is more preferably 2 parts by mass or more, and still more preferably 5 parts by mass or more. Meanwhile, when the addition amount exceeds 30 parts by mass, the water content of the hydrous EVOH becomes excessively high, the EVOH is likely to leak out from a dewatering slit, and the energy required for drying also increases. Therefore, the addition amount is more preferably 20 parts by mass or less, and still more preferably 15 parts by mass or less.

In the melt-kneading step (II), it is preferable to discharge the liquid water or the water vapor from at least one place of the extruder. This makes it possible to reduce the water content of the hydrous EVOH in the extruder. The method for discharging the liquid water or the water vapor is not particularly limited, and a dewatering slit or a vacuum vent may be used. Since in the melt-kneading step of the present invention, the water content of the hydrous EVOH resin composition to be discharged from the extruder is not very low, it is often unnecessary to use a vacuum vent, and a dewatering slit is suitably used. Through the dewatering slit may be discharged either the water vapor or the liquid water, but it is preferable to discharge the water vapor from the viewpoint of taking latent heat of evaporation and well removing heat. Further, in the melt-kneading step (II) of the present invention, it is preferable to discharge the liquid water or the water vapor from a position downstream of the position to which the aqueous solution or the aqueous dispersion is added. As a result, the water content of the hydrous EVOH resin composition to be discharged can be effectively reduced, and foaming can be suppressed.

In the melt-kneading step (II), an average residence time in the extruder of the EVOH is preferably 300 seconds or less. The shorter the average residence time in the extruder of the EVOH is, the higher the productivity of the extruder can be and the more thermal degradation can be prevented. The average residence time is more preferably 200 seconds or less, still more preferably 100 seconds or less, and particularly preferably 40 seconds or less. The average residence time is usually 5 seconds or more.

In the cutting step (III), the molten resin composition discharged from the extruder is cut, whereby EVOH resin composition hydrous pellets having a water content W₂ of 5 to 20% by mass are obtained. The cutting method is not particularly limited, and examples thereof include a method of directly cutting the molten hydrous EVOH resin composition discharged from the extruder, and a method of extruding the hydrous EVOH resin composition discharged from the extruder in a strand shape into a coagulating liquid, coagulating the EVOH, and then cutting the EVOH. Among these methods, the method of directly cutting the hydrous EVOH resin composition is preferable. As a method of directly cutting the hydrous EVOH resin composition discharged from the extruder, a hot cutting system, an underwater cutting system, or the like is adopted. When the hydrous EVOH is extruded into a strand shape to coagulate and then cut, cylindrical pellets are obtained, whereas when directly cut in a molten state, spherical (or substantially spherical) pellets are obtained. The size of the EVOH resin composition hydrous pellets to be produced can be, for example, 1 mm or more and 10 mm or less in diameter in the case of a spherical (or substantially spherical) shape, and 1 mm or more and 10 mm or less in diameter and 1 mm or more and 10 mm or less in length in the case of a cylindrical shape.

The water content W₂ of the EVOH resin composition hydrous pellets obtained in the cutting step (III) is 5 to 20% by mass. By setting the water content W₂ to 5% by mass or more, the temperature of the molten resin in the melt-kneading step (II) can be lowered, so that the EVOH can be inhibited from being thermally degraded during melt-kneading. When the water content W₂ is 5% by mass or more, it is unnecessary to provide the extruder with a vacuum vent to reduce the water content, and the equipment can be simplified. Meanwhile, when the water content W₂ is 20% by mass or less, the EVOH can be prevented from leaking out from the dewatering slit even when the extruder is operated at a high speed, and the productivity can be improved. In addition, foaming of the resulting pellets can be inhibited, and energy consumption in the subsequent second drying step (IV) can also be suppressed.

The EVOH resin composition hydrous pellets thus obtained in the cutting step (III) are subjected to the second drying step (IV). The dryer to be used in the second drying step (IV) is not particularly limited as long as it can dry the pellets while maintaining the form thereof. A hot air dryer or the like can be used. The drying method may be a fluidized drying method using a fluid type dryer or a ventilation drying method using a ventilation dryer, and these may be used in combination. A method in which drying is first performed at a relatively low temperature using a fluid type dryer, and subsequently drying is performed at a high temperature using a ventilation dryer is suitably employed.

Although the drying temperature and the drying time are not particularly limited, the drying temperature is preferably 50 to 150°C, and the drying time is preferably 1 hour to 7 days. When both the fluidized drying method and the ventilation drying method are employed, both the drying temperatures are included in the above temperature range, and the total of both the drying times is included in the drying time. The drying temperature is more preferably 60°C or more, still more preferably 70°C or more, and particularly preferably 80°C or more. The drying temperature is more preferably 140°C or less, still more preferably 130°C or less, and particularly preferably 120°C or less. The drying time is more preferably 2 hours or more, and still more preferably 5 hours or more. The drying time is more preferably 5 days or less, and still more preferably 3 days or less. When both the fluidized drying method and the ventilation drying method are employed, the drying temperature of the latter method is preferably higher than the drying temperature of the former method by 5°C or more, and more preferably higher by 10°C or more. The drying may be performed in air or in an inert gas such as nitrogen. In the case of drying in an inert gas, thermal degradation is less likely to occur even when the drying temperature is set to be high.

The EVOH resin composition pellets obtained by drying in the second drying step (IV) have a water content W₃ of 0.5% by mass or less. When the water content W₃ is 0.5% by mass or less, problems such as foaming do not occur even when the pellets are directly subjected to melt-molding without being further dried. The water content W₃ is preferably 0.4% by mass or less, and more preferably 0.3% by mass or less. Meanwhile the water content W₃ is usually 0.01% by mass or more, and even if the water content W₃ is reduced more than necessary, energy consumption merely increases.

In the manner as described above, EVOH resin composition dry pellets containing an additive are obtained. According to the production method of the present invention, it is possible to improve the production speed when an additive is added to hydrous EVOH in an extruder, and thereby efficiently obtain EVOH resin composition pellets. The EVOH resin composition pellets thus obtained are molded into various molded articles such as a film, a sheet, a container, a pipe, and a fiber by melt-molding, or are used for various applications.

### Examples

The present invention is described below more concretely with reference to Examples, but the invention is not limited at all by the Examples. In the Examples and the Comparative Examples described later, analysis and evaluation were performed by the following methods.

### (1) Measurement of water content of pellets

Using a halogen moisture analyzer, the water content of the pellets obtained in Examples and Comparative Examples was measured by heat drying mass measurement under the conditions of a drying temperature of 180°C, a drying time of 20 minutes, and 10 g of the amount of a sample. The water content of the pellets was determined using the following formula. Water content (% by mass) = [(mass before drying - mass after drying)/mass before drying] × 100

### (2) Quantitative determination of carboxylic acid

To 100 mL of ion-exchanged water were added 20 g of the dry EVOH resin composition pellets obtained in Examples and Comparative Examples, followed by extraction by heating at 95°C for 6 hours. The extract obtained was subjected to neutralization titration with a 0.01 mol/L sodium hydroxide solution using phenolphthalein as an indicator, whereby the carboxylic acid content in the dry EVOH resin composition pellets was calculated.

### (3) Quantitative determination of metal salt, boron compound, and phosphoric acid compound

In Teflon (registered trademark) pressure vessel were placed 0.5 g of the EVOH resin composition pellets obtained in Examples and Comparative Examples, and 5 mL of concentrated nitric acid was added thereto, and the pellets were decomposed at room temperature for 30 minutes. A lid was put on the pressure vessel after decomposition, and heating was carried out using a wet decomposition apparatus ("MWS-2" manufactured by ACTAC Co., Ltd.) at 150°C for 10 minutes and then at 180°C for 5 minutes for further decomposition, followed by cooling to room temperature. This treatment liquid was transferred to a 50 mL volumetric flask and diluted with deionized water, affording a sample solution for measurement. Using an ICP emission spectrophotometer ("OPTIMA 4300DV" manufactured by PerkinElmer, Inc.), the contents of metal elements, boron element, and phosphorus element in the sample solution were measured. From the values thus obtained, the metal salt content (metal ion content) in terms of the metal elements, the boron compound content in terms of boron element, and the phosphoric acid compound content in terms of phosphate radical in the EVOH resin composition pellets were determined.

### (4) Evaluation of EVOH leakage

EVOH resin composition pellets were continuously produced by the methods described in Examples and Comparative Examples, and whether a dewatering slit, which was a water or vapor discharge port, provided in a twin-screw extruder had a white mark indicating leakage of EVOH or whether a resin was attached to a vent port, which is a water vapor discharge port, was visually confirmed, and evaluation was performed according to the following evaluation criteria. When the evaluation was C, it was determined that efficient production was not possible.
A: Even after a continuous operation for 10 days or more, no mark of leakage of the EVOH was found at the discharge port.
B: In a continuous operation for 7 days or more and less than 10 days, a mark indicating leakage of the EVOH was found at the discharge port.
C: In a continuous operation for less than 7 days, a mark indicating leakage of the EVOH was found at the discharge port. Alternatively, the resin was attached to the vent port.

### (5) Foaming

100 g of EVOH resin composition pellets obtained by cutting and drying the resin composition after being discharged from the extruder were collected, and the proportion (% by mass) of pellets in which shape defects such as dimples, bubble entrainment, and foaming were observed was determined, and followed by evaluation according to the following criteria. When the evaluation was C, it was determined that efficient production was not possible.

### (Evaluation)

A: less than 1% by mass
B: 1% by mass or more and less than 5% by mass
C: 5% by mass or more

### [Example 1]

An EVOH solution containing 100 parts by mass of methanol, 50 parts by mass of water, and 2 parts by mass (in terms of sodium) of sodium acetate with respect to 100 parts by mass of an EVOH having an ethylene unit content of 32 mol% and a degree of saponification of 99.8 mol% was continuously fed at 521 kg/hr to the uppermost plate of a plate tower having a tower diameter of 0.6 m and 10 plates in total, and water vapor was blown at 600 kg/hr to the lowermost plate of the plate tower, whereby the EVOH solution and the water vapor were brought into countercurrent contact with each other in the plate tower. The temperature in the column was 130°C, and the pressure in the column was 3 kg/cm². Methanol vapor and water vapor were distilled off from the top of the shelf tower, and these were condensed in a condenser and recovered as a methanol aqueous solution. Further, the EVOH water-containing composition was continuously extracted from the bottom of the shelf tower. This EVOH water-containing composition contained 0.05 parts by mass of methanol, 105 parts by mass of water, and 2 parts by mass of sodium acetate in terms of sodium, based on 100 parts by mass of EVOH.

Next, this EVOH hydrous composition was supplied to a kneader having a diameter of 50 mm and L/D=13.2 with a liquid outlet at 430 kg/hr. At this time, the rotation speed of the screw was set to 1000rpm. The EVOH hydrous composition obtained from the discharge port contained 0.03 parts by mass of methanol, 68 parts by mass of water (water content: 40% by mass), and 1.2 parts by mass (in terms of sodium) of sodium acetate with respect to 100 parts by mass of EVOH, and had a temperature of 118°C. Subsequently, this EVOH water-containing composition was extruded from a die having a hole diameter of 3 mm and 6 holes, and cut with a hot cutter having 8 blades at a distance of 0.05 mm from the die to obtain EVOH water-containing pellets. The number of revolutions of the cutter blade was 2500rpm.

The obtained pellets were fed at 348 kg/hr to the top of a tower type processor having a diameter of 1.2 m and a height of 4 m. A 0.5 g/L of aqueous acetic acid solution (50°C) was fed to the lower part of the processor at 500 L/hr, and the pellets and the aqueous acetic acid solution were brought into countercurrent contact in the processor. The aqueous acetic acid solution was discharged from the top of the processor, and washed pellets were continuously taken out from the bottom of the processor. The water content of the EVOH hydrous pellets after washing was 40% by mass, and 0.002% by mass (in terms of sodium) of sodium acetate remained.

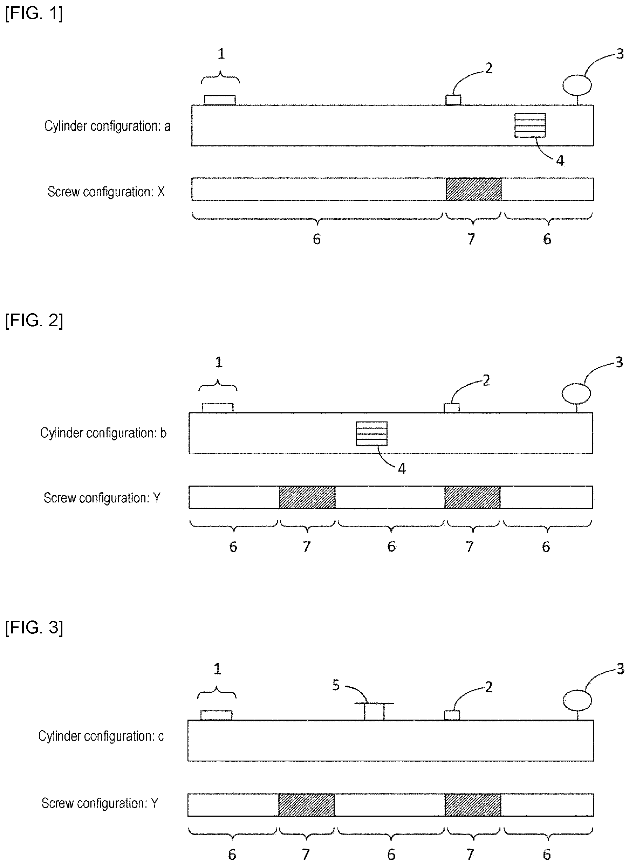

The thus obtained EVOH hydrous pellets (ethylene unit content: 32mol%, degree of saponification: 99.8mol%) having a water content W₀ of 40% by mass were fed into a fluid type dryer and dried at 80°C for 60 minutes. EVOH hydrous pellets having a water content W₁ of 13% by mass obtained after drying were fed to a twin-screw extruder. FIG. 1 shows the cylinder configuration and the screw configuration of the twin-screw extruder. The resin temperature measured with the temperature sensor 3 was set to 160°C, and an aqueous solution of acetic acid/boric acid/sodium acetate/magnesium acetate/potassium dihydrogen phosphate was added from the additive introduction part 2. The amount of the aqueous solution charged per unit time was 20.8 L/hr. The aqueous solution was an aqueous solution containing 3.5 g/L of acetic acid, 15 g/L of boric acid, 7.7 g/L of sodium acetate trihydrate, 3.1 g/L of magnesium acetate tetrahydrate, and 1.7 g/L of potassium dihydrogen phosphate.

The specifications of the twin-screw extruder are as follows. The twin-screw extruder cylinder (cylinder configuration a, screw configuration X) shown in FIG. 1 is provided with a pellet feed part 1, an additive introduction part 2, and a dewatering slit 4. The screw is a combination of a full flight screw 6 and a reverse flight screw 7 as shown in FIG. 1. Furthermore, a temperature sensor 3 is arranged at an end of the cylinder.
Type: twin-screw extruder
L/D: 45.5
Diameter: 30 mmφ
Screw: co-rotating fully intermeshing type
Rotation speed: 300 rpm
Die diameter: 3.0 mmφ

The hydrous EVOH resin composition in a molten state discharged from the twin-screw extruder was cut with a hot cutter, affording EVOH resin composition hydrous pellets. The water content W₂ of the EVOH resin composition hydrous pellets immediately after being obtained was 10% by mass, the discharge amount of the EVOH from the twin-screw extruder was 208 kg/hour (not including the amount of water contained), and the residence time was 25 seconds. EVOH resin composition pellets were continuously produced under the conditions described above, and leakage and foaming of the EVOH were evaluated according to the methods described above in (4) to (5). The results are shown in Table 1. The EVOH resin composition hydrous pellets obtained were dried at 90°C for 15 hours using a fluidized-bed dryer, and subsequently dried at 105°C for 15 hours using a ventilation dryer, affording EVOH resin composition pellets having a water content W₃ of 0.2% by mass. The EVOH resin composition pellets obtained were subjected to the quantitative determination of a carboxylic acid, metal salts, a boron compound, and a phosphorus compound according to the methods described above in (2) and (3). As a result, the acetic acid content was 260 ppm, the boric acid content was 260 ppm in terms of boron, the phosphoric acid content was 90 ppm in terms of phosphate radical, the sodium ion content was 125 ppm, the potassium ion content was 35 ppm, and the magnesium ion content was 35 ppm.

### [Examples 2, 3, and 5 to 7, Comparative Examples 1 and 2]

EVOH resin composition pellets were prepared by the same method as in Example 1 except that the ethylene unit content and the water content W₀ of the EVOH hydrous pellets, the drying temperature and the drying time in the first drying step, and the resin temperature, the addition amount of the aqueous solution, the EVOH discharge amount, and the residence time in the melt-kneading step were changed as shown in Table 1, and analyzed and evaluated in the same manner as in Example 1. In Examples and Comparative Examples of the present application, the discharge amount and the residence time were adjusted by adjusting the feed rate of the EVOH hydrous pellets to the twin-screw extruder, and the rotation speed of the extruder was adjusted according to the production rate. The results are shown in Table 1. All the dry EVOH resin composition pellets contained trace components in amounts similar to those in Example 1, and the acetic acid content was in the range of 240 to 300 ppm, the boric acid content was in the range of 240 to 270 ppm in terms of boron, the phosphoric acid content was in the range of 85 to 95 ppm in terms of phosphate radical, the sodium ion content was in the range of 120 to 140 ppm, the potassium ion content was in the range of 30 to 40 ppm, and the magnesium ion content was in the range of 30 to 40 ppm. In the following Examples and Comparative Examples, even when a trace component was contained in an amount similar to that in Example 1, the amount was within the above numerical range.

### [Example 4]

EVOH resin composition pellets were produced in the same manner as in Example 1 except that the drying temperature in the first drying step and the resin temperature and the addition amount of the aqueous solution in the melt-kneading step were changed as shown in Table 1, and the aqueous solution containing an additive was changed to an aqueous solution containing 1.8 g/L of acetic acid, 8 g/L of boric acid, 3.8 g/L of sodium acetate trihydrate, 1.5 g/L of magnesium acetate tetrahydrate, and 0.9 g/L of potassium dihydrogen phosphate. Then, analysis and evaluation were performed in the same manner as in Example 1. The results are shown in Table 1. The dry EVOH resin composition pellets obtained contained trace components in amounts similar to those in Example 1.

### [Example 8]

EVOH resin composition pellets were produced in the same manner as in Example 1 except that the drying temperature in the first drying step and the cylinder configuration, the resin temperature and the addition amount of the aqueous solution in the melt-kneading step were changed as shown in Table 1, and the aqueous solution containing an additive was changed to an aqueous solution containing 7.0 g/L of acetic acid, 30 g/L of boric acid, 15.4 g/L of sodium acetate trihydrate, 6.2 g/L of magnesium acetate tetrahydrate, and 3.4 g/L of potassium dihydrogen phosphate. Then, analysis and evaluation were performed in the same manner as in Example 1. Here, as shown in FIG. 2, when the cylinder configuration is cylinder configuration b in the present description, the screw configuration is screw configuration Y. The results are shown in Table 1. The obtained dry EVOH resin composition pellets contained trace components similar to those in Example 1.

### [Comparative Examples 3 to 6]

Dry EVOH resin composition pellets were prepared in the same manner as in Example 1 except that the ethylene unit content, the degree of saponification, and the water content W₀ of the EVOH water-containing pellet, and the cylinder configuration, the resin temperature, the addition amount of the aqueous solution, the EVOH discharge amount, and the residence time in the melt-kneading step were changed as shown in Table 1, and drying in the first drying step was not performed, and analysis and evaluation were performed in the same manner as in Example 1. The concentration of the additive in the aqueous solution added to the extruder in Comparative Example 5 is the same as that in Example 8. The results are shown in Table 1. All the dry EVOH resin composition pellets contained trace components similar to those in Example 1.

### [Comparative Example 7]

Dry EVOH resin composition pellets were produced in the same manner as in Example 1, except that the ethylene unit content and the degree of saponification of the EVOH water-containing pellets, and the cylinder configuration, the resin temperature, the amount of the aqueous solution added, the EVOH discharge amount, and the retention time in the melt-kneading step were changed as shown in Table 1, and analyzed and evaluated in the same manner as in Example 1. Here, as illustrated in FIG. 3, the screw configuration when the cylinder configuration is c in the present specification is Y. The concentration of the additive in the aqueous solution added into the extruder is the same as in Example 8. The results are shown in Table 1. The dry EVOH resin composition pellets obtained contained trace components in amounts similar to those in Example 1.

### [Comparative Example 8]

An attempt was made to prepare dry EVOH resin composition pellets by the same method as in Example 7 except that the addition amount of the aqueous solution, the discharge amount of EVOH, and the residence time in the melt-kneading step were changed as shown in Table 1. However, since the torque applied to the extruder increased, so that it became impossible to perform melt-kneading, the subsequent steps were canceled.

### [Comparative Examples 9 and 10]

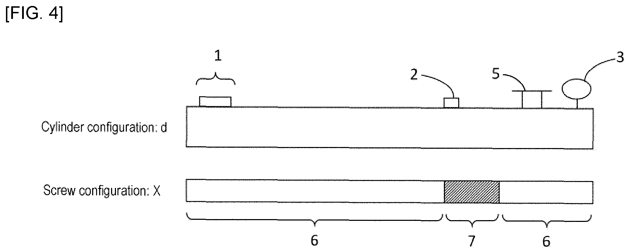

Dry EVOH resin composition pellets were prepared in the same manner as in Example 1 except that the degree of saponification and the water content W₀ of the EVOH hydrous pellets, and the cylinder configuration, the resin temperature, the addition amount of the aqueous solution, the discharge amount of EVOH, and the residence time in the melt-kneading step were changed as shown in Table 1, and in the first drying step, the water content W₁ of the pellets was adjusted to 9.9% by mass by drying the pellets at 65°C for 60 minutes using a ventilation type hot air dryer, and then drying at 80°C for 25 minutes using a ventilation type hot air dryer, and the second drying step was not provided after the cutting step. Then, analysis and evaluation were performed in the same manner as in Example 1. Here, as shown in FIG. 4, when the cylinder configuration is cylinder configuration d in the present description, the screw configuration is screw configuration X. In addition, the concentration of the additive in the aqueous solution added to the extruder is the same as that in Example 4. The results are shown in Table 1. All the dry EVOH resin composition pellets obtained contained trace components in amounts similar to those in Example 1.

### [Comparative Example 11]

An attempt was made to prepare dry EVOH resin composition pellets by the same method as in Example 1 except that the degree of saponification and the water content W₀ of the EVOH hydrous pellets and the drying time in the first drying step were changed as shown in Table 1, but the EVOH hydrous pellets stuck to each other in the first drying step, and thus the subsequent steps were canceled.

**[Table 1]**

| | EVOH hydrous pellet | | | First drying step | | | | Melt-kneading step | | | | | | Cutting step | Second drying step | | | |
|---|---|---|---|---|---|---|---|---|---|---|---|---|---|---|---|---|---|---|
| | Ethylene unit content | Degree of saponification | Water content W₀ | Drying temperature | Drying time | Water content W₁ | W₀-W₁ | Cylinder configuration | Resin temperature | Added amount of aqueous solution | EVOH discharge amount | Residence time | EVOH leakage | Water content W₂ | Drying temperature | Drying time | Water content W₃ | Foaming |
| | mol% | mol% | % by mass | °C | minute | % by mass | % by mass | | °C | L/hr | kg/hr | second | | % by mass | °C | hour | % by mass | |
| Example 1 | 32 | 99.8 | 40 | 80 | 60 | 13 | 27 | a | 160 | 20.8 | 208 | 25 | A | 10 | 90/105 | 15/15 | 0.2 | A |
| Example 2 | 24 | 99.8 | 48 | 80 | 60 | 17 | 31 | a | 170 | 15.6 | 156 | 33 | A | 15 | 90/105 | 15/15 | 0.2 | A |
| Example 3 | 48 | 99.8 | 35 | 70 | 60 | 9 | 26 | a | 160 | 25.0 | 250 | 21 | A | 7 | 90/105 | 15/15 | 0.2 | A |
| Example 4 | 32 | 99.8 | 40 | 90 | 60 | 6 | 34 | a | 180 | 41.7 | 208 | 25 | A | 15 | 90/105 | 15/15 | 0.2 | B |
| Example 5 | 32 | 99.8 | 40 | 90 | 60 | 6 | 34 | a | 180 | 20.8 | 208 | 25 | A | 5 | 90/105 | 15/15 | 0.2 | A |
| Example 6 | 32 | 99.8 | 40 | 70 | 60 | 20 | 20 | a | 160 | 20.8 | 208 | 25 | A | 20 | 90/105 | 15/15 | 0.2 | B |
| Example 7 | 32 | 99.8 | 40 | 70 | 60 | 20 | 20 | a | 180 | 20.8 | 208 | 25 | B | 8 | 90/105 | 15/15 | 0.2 | A |
| Example 8 | 32 | 99.8 | 40 | 70 | 60 | 20 | 20 | b | 190 | 10.4 | 208 | 25 | A | 10 | 90/105 | 15/15 | 0.2 | B |
| Comparative Example 1 | 32 | 99.8 | 40 | 70 | 30 | 30 | 10 | a | 150 | 9.0 | 90 | 48 | C | 20 | 90/105 | 15/15 | 0.2 | B |
| Comparative Example 2 | 32 | 99.8 | 40 | 100 | 60 | 2 | 38 | a | 210 | 9.0 | 90 | 62 | A | 6 | 90/105 | 15/15 | 0.2 | C |
| Comparative Example 3 | 32 | 99.8 | 40 | - | - | - | - | b | 100 | 0.64 | 6.5 | 614 | A | 20 | 90/105 | 15/15 | 0.2 | A |
| Comparative Example 4 | 32 | 99.8 | 40 | - | - | - | - | b | 100 | 9.0 | 90 | 44 | C | 20 | 90/105 | 15/15 | 0.2 | B |
| Comparative Example 5 | 10 | 99 | 20 | - | - | - | - | b | 105 | 0.32 | 6.4 | 745 | A | 12 | 90/105 | 15/15 | 0.2 | A |
| Comparative Example 6 | 10 | 99 | 20 | - | - | - | - | b | 105 | 3.6 | 36 | 135 | C | 12 | 90/105 | 15/15 | 0.2 | A |
| Comparative Example 7 | 55 | 90 | 40 | 80 | 60 | 10 | 30 | C | 100 | 0.45 | 9 | 579 | A | 10 | 90/105 | 15/15 | 0.2 | B |
| Comparative Example 8 | 55 | 90 | 40 | 80 | 60 | 10 | 30 | C | 100 | 4.5 | 90 | 58 | - | - | - | - | - | - |
| Comparative Example 9 | 32 | 99.98 | 32 | 65/80 | 60/25 | 9.9 | 22.1 | d | 220 | 2.0 | 10 | 524 | A | 0.2 | - | - | 0.2 | A |
| Comparative Example 10 | 32 | 99.98 | 32 | 65/80 | 60/25 | 9.9 | 22.1 | d | 220 | 24.0 | 120 | 46 | C | 0.2 | - | - | 0.2 | A |
| Comparative Example 11 | 32 | 99.98 | 55 | 80 | 80 | 16 | 39 | - | - | - | - | - | - | - | - | - | - | - |

### Reference Signs List

- 1: pellet feeding part
- 2: additive introduction part
- 3: temperature sensor
- 4: dewatering slit
- 5: vent
- 6: full flight screw
- 7: reverse flight screw

## Claims

1. A method for producing ethylene-vinyl alcohol copolymer resin composition pellets, comprising:
a first drying step (I) of introducing ethylene-vinyl alcohol copolymer hydrous pellets having a water content W₀ of 25 to 50% by mass into a dryer and reducing a water content W₁ of the pellets to 5 to 25% by mass;
a melt-kneading step (II) of introducing the pellets obtained in the first drying step (I) into an extruder, adding an aqueous solution or aqueous dispersion containing an additive, and melt-kneading the pellets;
a cutting step (III) of cutting a molten resin composition discharged from the extruder to obtain ethylene-vinyl alcohol copolymer resin composition hydrous pellets having a water content W₂ of 5 to 20% by mass; and
a second drying step (IV) of drying the hydrous pellets obtained in the cutting step (III) to obtain ethylene-vinyl alcohol copolymer resin composition pellets having a water content W₃ of 0.5% by mass or less,
wherein a water content decrement (W₀ - W₁) in the first drying step (I) is 10 to 45% by mass, and
the ethylene-vinyl alcohol copolymer has an ethylene unit content of 20 to 60 mol% and a degree of saponification of 95 mol% or more.

2. The production method according to claim 1, wherein in the melt-kneading step (II), an average residence time of the ethylene-vinyl alcohol copolymer in the extruder is 300 seconds or less.

3. The production method according to claim 1 or 2, wherein in the melt-kneading step (II), the aqueous solution or aqueous dispersion to be added is an aqueous solution in which at least one additive selected from among carboxylic acids, boron compounds, phosphoric acid compounds, alkali metal salts, and alkaline earth metal salts is dissolved.

4. The production method according to any one of claims 1 to 3,
wherein in the melt-kneading step (II), liquid water or water vapor is discharged from at least one place of the extruder.

5. The production method according to claim 4, wherein in the melt-kneading step (II), the liquid water or the water vapor is discharged from a position downstream of a position to which the aqueous solution or aqueous dispersion is added.

6. The production method according to any one of claims 1 to 5,
wherein the ethylene-vinyl alcohol copolymer hydrous pellets are obtained via a step (A) of introducing an ethylene-vinyl alcohol copolymer solution containing 50 parts by mass or more of an alcohol having a boiling point of 100°C or less with respect to 100 parts by mass of the ethylene-vinyl alcohol copolymer into a vessel, putting the solution into contact with water vapor in the vessel to let out the alcohol with the water vapor, and letting out a hydrous ethylene-vinyl alcohol copolymer from the vessel; a step (B) of feeding the hydrous ethylene-vinyl alcohol copolymer to an extruder, melt-kneading the copolymer, and then discharging the copolymer from the extruder; and a step (C) of cutting the hydrous ethylene-vinyl alcohol copolymer discharged from the extruder, and then the ethylene-vinyl alcohol copolymer hydrous pellets are supplied to the first drying step (I).
